# EUROPÄISCHE PATENTSCHRIFT

(11) **EP 0 356 971 B1**
(45) Veröffentlichungstag und Bekanntmachung des Hinweises auf die Patenterteilung: **27.04.1994**
(21) Anmeldenummer: 89115868.5
(22) Anmeldetag: 29.08.1989
(51) Int. Cl.: C07F 7/10, G11B 7/24

(54) **Tetraazaporphyrine sowie optisches Aufzeichnungsmedium**
Tetraazaporphyrins and optical recording medium
Tetraazaporphyrines et milieu d'enregistrement optique

(30) Priorität: 02.09.1988 DE 3829851
(43) Veröffentlichungstag der Anmeldung: 07.03.1990
(73) Patentinhaber: BASF Aktiengesellschaft, 67063 Ludwigshafen (DE)
(72) Erfinder: Albert, Bernhard, Dr., D-6701 Maxdorf (DE); Neumann, Peter, Dr., D-6800 Mannheim 31 (DE); Kohler, Rolf-Dieter, Dr., D-6803 Edingen-Neckarhausen (DE)

(56) Entgegenhaltungen:
- EP-A- 0 191 215
- EP-A- 0 252 360
- EP-A- 0 254 553
- PATENT ABSTRACTS OF JAPAN Band 11, Nr. 158 (M-591)(2605), 22. Mai 1987; & JP - A - 61 291 187 (MITSUBISHI CHEM. IND. LTD.) 20.12.1986

## Beschreibung

Die vorliegende Erfindung betrifft neue Tetraazaporphyrine der Formel I 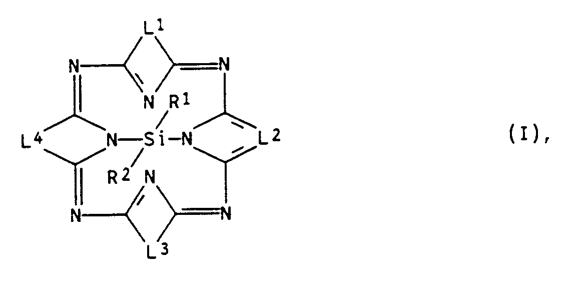
in der
- L¹, L², L³ und L⁴: gleich oder verschieden sind und unabhängig voneinander jeweils den Rest eines bicyclischen aromatischen Heterocyclus mit 1 bis 3 gleichen oder verschiedenen Heteroatomen, ausgewählt aus der Gruppe, umfassend N, O und S, der gegebenenfalls durch C₁-C₂₀-Alkyl, das gegebenenfalls durch Phenyl substituiert ist, C₂-C₂₀-Alkenyl, C₁-C₂₀-Alkoxy, das gegebenenfalls durch Phenyl substituiert ist, Fluor, Chlor oder Brom substituiert ist, und
- R¹ und R²: gleich oder verschieden sind und unabhängig voneinander jeweils Hydroxy, C₁-C₂₀-Alkoxy, C₁-C₂₀-Alkyl, C₂-C₂₀-Alkenyl, C₃-C₂₀-Alkenyloxy oder einen Rest der Formel II 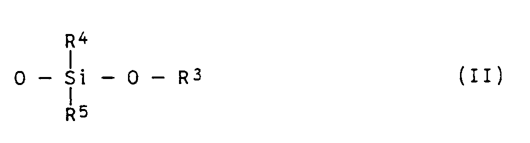 bedeuten, worin R³ für C₄-C₂₀-Alkyl, C₄-C₂₀-Alkenyl oder durch Phenyl substituiertes C₁-C₂₀-Alkyl und R⁴ und R⁵ gleich oder verschieden sind und unabhängig voneinander jeweils für C₁-C₁₂-Alkyl oder den Rest OR³, in dem R³ die obengenannte Bedeutung besitzt, stehen,
sowie ein optisches Aufzeichnungsmedium, das die neuen Tetraazaporphyrine enthält.

Aufzeichnungsmaterialien, die mit Strahlen hoher Energiedichte, z.B. Laserlicht, eine lokal begrenzte Zustandsänderung erfahren, sind bekannt.

Mit dieser thermisch ausgelösten Zustandsänderung, z.B. Verdampfen, Änderung des Fließverhaltens oder Ausbleichen, ist eine Änderung der optischen Eigenschaften, beispielsweise der Reflexion oder Absorption durch Änderung des Absorptionsmaximums oder der Extinktion verbunden, welche zur Informations- oder Datenaufzeichnung ausgenutzt werden kann.

Als Lichtquelle für ein optisches Aufzeichnungsmedium eignen sich beispielsweise Halbleiterlaser, die Licht im nahen Infrarot emittieren. Festkörper-Injektionslaser, vor allem der AlGaAs-Laser, der im Wellenlängenbereich zwischen etwa 650 und 900 nm arbeitet, sind hierbei besonders zu nennen. Daher besteht besonders Interesse an solchen Aufzeichnungsmaterialien, die Strahlung im Wellenlängenbereich Zwischen ca. 650 und 900 nm absorbieren und sich zu dünnen, homogenen Schichten verarbeiten lassen.

Zu den strahlungsempfindlichen Stoffen, die in optischen Aufzeichnungssystemen Verwendung finden, gehören auch IR-Farbstoffe. So sind z.B. optische Speicher bekannt, die als strahlungsempfindliche Komponenten Phthalocyanine oder Naphthalocyanine enthalten (DE-A-3 622 590, EP-A-13 453, EP-A-203 826, US-A-4 458 004, US-A-4 492 750, JP-A 82 093/1982, JP-A 35 545/1985, EP-A-191 970, EP-A-191 215, EP-A-204 876, EP-A-198 140 oder US-A-4 605 607).

Die EP-A- 254 553 beschreibt Naphthalocyanine mit Silicium als Zentralatom.

Weiterhin sind aus der JP-A- 291 187/1986 Tetraazaporphyrine bekannt, die monocyclische heterocyclische Reste als Liganden und kein Silicium als Zentralatom aufweisen.

Aufgabe der vorliegenden Erfindung war es, neue strahlungsempfindliche Produkte bereitzustellen, die im Wellenlängenbereich der verwendeten Halbleiterlaser eine gute Reflexion und eine hohe Absorption aufweisen. Demgemäß wurden die oben näher bezeichneten Tetraazaporphyrine der Formel I gefunden.

Alle in den erfindungsgemäßen Tetraazaporphyrinen auftretenden Alkyl und Alkenylgruppen können sowohl geradkettig als auch verzweigt sein.

Die bicyclischen aromatischen Heterocyclen, von denen sich die Reste L¹, L², L³ und L⁴ ableiten, weisen 1 bis 3, vorzugsweise 1 oder 2, gleiche oder verschiedene Heteroatome, ausgewählt aus der Gruppe, umfassend N, O und S, auf und sind gegebenenfalls substituiert. Die Ringe des bicyclischen Systems weisen dabei im allgemeinen jeweils 5 oder 6 Ringglieder auf.

Wenn die bicyclischen aromatischen Heterocyclen substituiert sind, so können dabei pro Bicyclus im allgemeinen 1 bis 4 Substituenten (im weiteren als X bezeichnet) auftreten.

Beispielhaft seien die Grundkörper der folgenden bicyclischen aromatischen Heterocyclen genannt, von denen sich die Reste L¹, L², L³ und L⁴ ableiten. Die Systeme können dabei jeweils, wie oben bereits ausgeführt, durch Substituenten X ein- bis viermal substituiert sein. 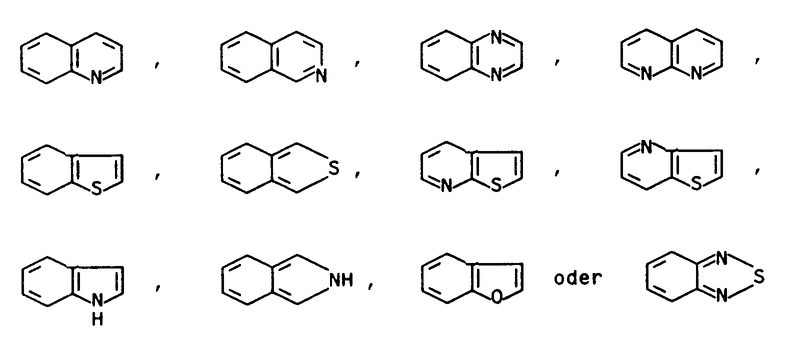
Reste R¹, R², R⁴, R⁵ und X sind z.B. Methyl, Ethyl, Propyl oder Isopropyl.

Reste R¹, R², R⁴, R⁵ und X sind weiterhin, wie auch R³, z.B. Butyl, Isobutyl, sec-Butyl, tert-Butyl, Pentyl, Isopentyl, Neopentyl, tert-Pentyl, Hexyl, 2-Methylpentyl, Heptyl, Octyl, 2-Ethylhexyl, Isoocytyl, Nonyl, Isononyl, Decyl, Isodecyl, Undecyl oder Dodecyl.

Reste R¹, R², R³ und X sind weiterhin z.B. Tridecyl, 3,5,5,7-Tetramethylnonyl, Isotridecyl, Tetradecyl, Pentadecyl, Hexadecyl, Heptadecyl, Octadecyl, Nonadecyl oder Eicosyl. (Die obigen Bezeichnungen Isooctyl, Isononyl, Isodecyl und Isotridecyl sind Trivialbezeichnungen und stammen von den nach der Oxosynthese erhaltenen Alkoholen - vgl. dazu Ullmanns Enzyklopädie der technischen Chemie, 4. Auflage, Band 7, Seiten 215 bis 217, sowie Band 11, Seiten 435 und 436.)

Reste R¹, R² und X sind weiterhin z.B. Methoxy, Ethoxy, Propoxy, Isopropoxy, Butoxy, Isobutoxy, Pentyloxy, Hexyloxy, Heptyloxy, Octyloxy, 2-Ethylhexyloxy, Isooctyloxy, Nonyloxy, Isononyloxy, Decyloxy, Isodecyloxy, Undecyloxy, Dodecyloxy, Tridecyloxy, Isotridecyloxy, Tetradecyloxy, Pentadecyloxy, Hexadecyloxy, Heptadecyloxy, Octadecyloxy, Nonadecyloxy, Eicosyloxy, Vinyl oder Allyl.

Reste R¹, R² und X sind weiterhin, wie auch R³, z.B. Methallyl, But-3-en-1-yl, Undec-10-en-1-yl, Octadec-9-en-1-yl, Octadec-9, 12-dien-1-yl, Octadec-9,12,15-trien-1-yl, Eicos-9-en-1-yl oder Eicos-5,8,11,14-tetraen-1-yl.

Reste R¹ und R² sind weiterhin z.B. Allyloxy, Methallyloxy, But-3-en-1-oxy, Undec-10-en-1-oxy, Octadec-9-en-1-oxy, Octadec-9,12-dien-1-oxy, Octadec-9,12,25-trien-1-oxy, Eicos-9-en-1-oxy oder Eicos-5,8,11,14-tetraen-1-oxy.

Wenn X und R³ durch Phenyl substituiertes C₁-C₂₀-Alkyl bedeuten, sind solche Reste z.B. Benzyl oder 1- oder 2-Phenylethyl.

Reste X sind weiterhin z.B. Benzyloxy oder 1- oder 2-Phenylethoxy.

Die erfindungsgemäßen Tetraazaporphyrine können nach an sich bekannten Methoden, wie sie bei der Herstellung von Phthalocyaninen oder Naphthalocyaninen zur Anwendung kommen und wie sie beispielsweise in F.H. Moser, A.L. Thomas "The Phthalocyanines", CRC Press, Boca Rota, Florida, 1983, oder J. Am. Chem. Soc. Band 106, Seiten 7404 bis 7410, 1984, beschrieben sind, erhalten werden.

Weiterhin ist in Z. Chem. Band 26, Seiten 217 und 218, 1986, die Herstellung von Tetra[2,3-chinoxalin]tetraazaporphinato-oxovanadin, ausgehend von 2,3-Dicyanochinoxalin beschrieben.

Als Ausgangsmaterial für die erfindungsgemäßen Tetraazaporphyrine der Formel I verwendet man zweckmäßig Dinitrile der Formel III 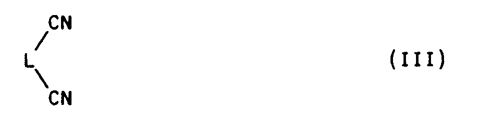
oder Diiminoisoindolinverbindungen der Formel IV 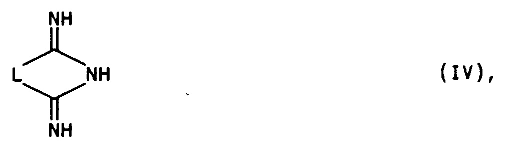
wobei L jeweils die oben für L¹, L², L³ und L⁴ genannte Bedeutung besitzt und die zur Tetraazaporphyrinbildung befähigten Substituenten jeweils orthoständig verknüpft sind.

Beispielsweise werden die Diaminoisoindoline der Formel IV mit Chlorsilanen der Formel V

YSiCl₃ (V),

in der Y für C₁-C₂₀-Alkyl, C₂-C₂₀-Alkenyl oder Chlor steht, in einem inerten organischen Verdünnungsmittel in Gegenwart einer Base bei einer Temperatur von 170 bis 250°C zu Tetraazaporphyrinen der Formel VIa 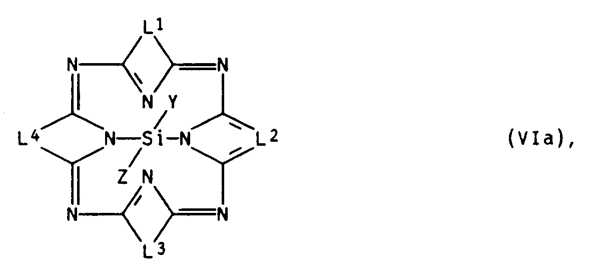
in der Z für Chlor steht und L¹, L², L³, L⁴ und Y jeweils die obengenannte Bedeutung besitzen, umgesetzt.

Geeignete Verdünnungsmittel sind z.B. Tetralin oder Nitrobenzol. Als Basen kommen z.B. tertiäre Amine, wie Tributylamin, Chinolin, Picoline oder Collidine in Betracht.

Durch Umsetzung der Verbindungen der Formel VIa mit C₁-C₂₀-Alkanolen oder C₃-C₂₀-Alkenolen bei einer Temperatur von 30 bis 120°C gelangt man zu denjenigen Verbindungen der Formel I, in der R¹ und/oder R² C₁-C₂₀-Alkoxy oder C₃-C₂₀-Alkenoxy bedeutet.

Die Chlorsiliciumderivate VIa können aber auch mit konzentrierter Schwefelsäure oder mit wäßrigen Basen, wie Natronlauge, Kalilauge oder wäßriger Ammoniaklösung, gegebenenfalls in Gegenwart von Pyridin, bei einer Temperatur von 5 bis 80°C in die entsprechenden Hydroxyverbindungen der Formel VIb übergeführt werden. Formel VIb ist identisch mit Formel VIa, jedoch steht Y jetzt für C₁-C₂₀-Alkyl, C₂-C₂₀-Alkenyl oder Hydroxy. Z steht ebenfalls für Hydroxy.

Durch Reaktion der Hydroxyverbindungen VIb zunächst mit Chlorsilanen der Formel VII 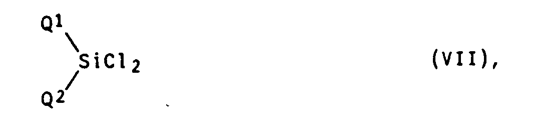
in der Q¹ und Q² gleich oder verschieden sind und unabhängig voneinander jeweils für C₁-C₁₂-Alkyl oder Chlor stehen, in Pyridin in Gegenwart von Natriumhydrid bei einer Temperatur von 15 bis 150°C und anschließend mit Alkoholen der Formel VIII

R³-OH (VIII),

in der R³ die obengenannte Bedeutung besitzt, bei einer Temperatur von 30 bis 120°C gelangt man schließlich zu den erfindungsgemäßen Tetraazaporphyrinen der Formel I.

Die neuen Tetraazaporphyrine der Formel I weisen im nahen Infrarot eine hohe molare Absorption auf. Sie bilden homogene, amorphe Schichten und/oder lassen sich in Farbstoff-in-Polymer-Schichten vorteilhaft einarbeiten.

Der Erfindung lag weiterhin die Aufgabe zugrunde, ein neues optisches Aufzeichnungsmedium bereitzustellen, wobei die die neuen Produkte enthaltenden Schichten homogen sein, eine gute Haftung auf den gebräuchlichen Trägermaterialien aufweisen und über einen langen Zeitraum hinweg stabil sein sollten.

Die Erfindung betrifft weiterhin ein optisches Aufzeichnungsmedium, enthaltend einen Träger und eine gegenüber Strahlung empfindliche Schicht, wobei die gegenüber Strahlung empfindliche Schicht ein Tetraazaporphyrin der Formel I 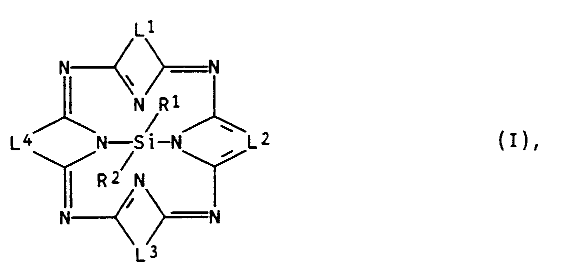
enthält, in der
- L¹, L², L³ und L⁴: gleich oder verschieden sind und unabhängig voneinander jeweils den Rest eines bicyclischen aromatischen Heterocyclus mit 1 bis 3 gleichen oder verschiedenen Heteroatomen, ausgewählt aus der Gruppe, umfassend N, O und S, der gegebenenfalls durch C₁-C₂₀-Alkyl, das gegebenenfalls durch Phenyl substituiert ist, C₂-C₂₀-Alkenyl, C₁-C₂₀-Alkoxy, das gegebenenfalls durch Phenyl substituiert ist, Fluor, Chlor oder Brom substituiert ist, und
- R¹ und R²: gleich oder verschieden sind und unabhängig voneinander jeweils Hydroxy, C₁-C₂₀-Alkoxy, C₁-C₂₀-Alkyl, C₂-C₂₀-Alkenyl, C₃-C₂₀-Alkenyloxy oder einen Rest der Formel II 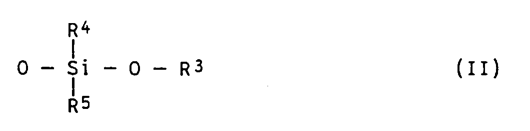 bedeuten, wobei R³ für C₄-C₂₀-Alkyl, C₄-C₂₀-Alkenyl oder durch Phenyl substituiertes C₁-C₂₀-Alkyl und R⁴ und R⁵ gleich oder verschieden sind und unabhängig voneinander jeweils für C₁-C₁₀-Alkyl oder den Rest OR³, in dem R³ die obengenannte Bedeutung besitzt, stehen.

Als weitere Komponenten des optischen Aufzeichnungsmediums kommen z.B. Polymerisate in Betracht, welche mit den Verbindungen der Formel I verträglich sind. Solche Polymerisate werden im allgemeinen als Bindemittel bezeichnet.

Beispiele geeigneter Bindemittel sind Polystyrole, Polyester, Polyacrylate, Polymethacrylate, Polycarbonate, Polyamine, Polyvinylalkohole, Polyvinylchloride, Copolymere von Vinylchlorid und Vinylacetat oder flüssigkristalline Seitengruppen enthaltende Polymerisate oder Copolymerisate gemäß der EP-A-90 282 oder EP-A-171 045.

Darüber hinaus kann das Aufzeichnungsmedium weitere geeignete Zusatzstoffe, wie niedermolekulare flüssigkristalline Verbindungen enthalten.

Bevorzugt ist ein optisches Aufzeichnungsmedium, dessen strahlungsempfindliche Schicht nur aus den Tetraazaporphyrinen der Formel I bestehen und wobei die Farbstoffe in amorphem Zustand vorliegen.

Der Begriff "amorph" gibt dabei an, daß die strahlungsempfindliche Schicht keine anisotropen Bereiche aufweist, die größer sind als ein Bruchteil der thermisch veränderten Bereiche, sondern daß sie in der Größenordnung von ca. 30 nm und darüber optisch isotrop ist.

Im allgemeinen beträgt die Dicke der strahlungsempfindlichen Schicht 20 bis 400 nm, vorzugsweise 50 bis 300 nm.

Vorzugsweise absorbieren die im erfindungsgemäßen optischen Aufzeichnungsmedium enthaltenen Farbstoffe Laserlicht, insbesondere Laserlicht relativ langer Wellenlänge (650 bis 900 nm).

Bevorzugt ist ein solches Aufzeichnungsmedium, das einen scheibenförmigen Träger, gegebenenfalls mit einer Reflektorschicht, aufweist und das das Schreiben und die Wiedergabe von Informationen mittels eines Halbleiterlasers ermöglicht.

Ein so aufgebauter optischer Speicher kann eine Information hoher Dichte in Form spiraler oder kreisförmig konzentrischer Wege, feiner Löcher oder Vertiefungen (von etwa 1 µm Breite), welche optisch durch Änderung der Reflektivität gegenüber der Umgebung feststellbar sind, aufnehmen. Er zeigt einen guten Kontrast.

Aufgrund der hohen Lichtabsorption der Farbstoffe ist das erfindungsgemäße Aufzeichnungsmedium sehr empfindlich gegenüber dem Licht des Halbleiter-Lasers.

Der Aufbau von Aufzeichnungsmedien ist an sich bekannt.

Als Träger kommen z.B. Glasplatten oder -scheiben oder Kunststoffplatten oder -scheiben, insbesondere Platten oder Scheiben aus Polymethylmethacrylat, Polystyrol, Polystyrol-Copolymeren, Polyvinylchlorid, Polymethylpenten oder Polycarbonat in Betracht, die gegebenenfalls Spurrillen aufweisen.

Der Träger kann dabei die Form eines Bandes, einer quadratischen oder rechteckigen Platte oder einer runden Scheiben haben, wobei die für laseroptische Aufzeichnungsmaterialien üblichen und bekannten Scheiben eines Durchmessers von 10 oder 13 cm bevorzugt werden.

Darüber hinaus können die Aufzeichnungsmaterialien weitere Schichten, wie Schutzschichten, Haftschichten oder Elektrodenschichten aufweisen.

Neben dem Träger kann weiterhin eine reflektierende Schicht vorhanden sein, so daß das eingestrahlte und durch die farbige Schicht wandernde Licht, soweit es nicht absorbiert wird, an der Reflektorschicht reflektiert wird und nochmals durch die gefärbte Schicht wandert.

Die Belichtung erfolgt bevorzugt durch ein transparentes Substrat. Als Schichtfolge kommt dann in Frage: Substrat-Absorberschicht-(gegebenenfalls Reflektor).

Der Träger oder die Licht reflektierende Schicht muß eine optisch glatte, ebene Oberfläche aufweisen, die so beschaffen sein muß, daß die absorbierende Schicht fest darauf haftet. Um die Oberflächenqualität und Adhäsionsphänomene günstig zu beeinflussen, kann der Träger und/oder der Reflektor mit einer Glättungsschicht aus einem duroplastischen oder thermoplastischen Material versehen werden.

Sofern die gegenüber Strahlung empfindliche Schicht keine ausreichende mechanische Stabilität aufweist, kann sie mit einer transparenten Schutzschicht überzogen werden. Hierzu bieten sich eine Reihe von Polymeren an, welche durch Aufschleudern, Aufrakeln oder Tauchen von gelösten Polymeren oder durch Aufdampfen im Vakuum, vornehmlich von fluorierten Polymeren, eine Schutzschicht bilden können.

Wenn der Datenspeicher aus zwei gleichen oder verschiedenen Aufzeichnungsmedien in Form eines "Sandwich" aufgebaut wird, kann auf eine Schutzschicht verzichtet werden. Neben größerer mechanischer und rotationsdynamischer Stabilität bietet der "Sandwich"-Aufbau den Vorteil der doppelten Speicherkapazität.

Auf die Schutz- und/oder Zwischenschichten kann bei ausreichender Qualität des optischen Aufzeichnungsmediums aber auch verzichtet werden.

Das erfindungsgemäße Aufzeichnungsmedium, das die neuen Tetraazaporphyrine enthält, absorbiert stark bei der Wellenlänge der Halbleiterlaser von ca. 650 bis 900 nm. Die Tetraazaporphyrine können so aufgebracht werden, daß sich glatte Absorptionsschichten von optischer Qualität ergeben, in die die zu speichernde Information mit hohem Signal:Rausch-Verhältnis eingeschrieben werden kann.

Das Aufbringen der Absorptionsmaterialien erfolgt vorzugsweise durch Aufschleudern von gelöstem oder dispergiertem Farbstoff, gegebenenfalls in Gegenwart von Bindemitteln. Auch Rakeln oder Tauchen kommen als Schichtbildungsverfahren in Frage. Das Aufbringen z.B. von metallischen Reflexionsschichten erfolgt vorzugsweise durch Aufdampfen im Vakuum oder durch Aufbringen geeigneter Metallfolien auf den Träger.

Für das Aufbringen der Absorptionsschichten aus Lösung bereitet man in einem geeigneten Lösungsmittel, wie Cyclohexan, Methylcyclohexan, Methylenchlorid, Chloroform, Tetrachlorkohlenstoff, Bromoform, 1,1,1-Tri-chlorethan, 1,1,2-Trichlorethan, Aceton, Methylethylketon, Cyclohexanon, Toluol, Acetonitril, Essigester, Methanol, Ethanol oder Mischungen dieser Lösungsmittel, eine Lösung oder gegebenenfalls eine Dispersion des Siliciumnaphthalocyanins oder Gemischen dieser Verbindungen und gegebenenfalls des Bindemittels und setzt gegebenenfalls ein Hilfsmittel zu.

Diese Farbstoffzubereitung wird dann durch Rakeln oder Tauchen, vorzugsweise aber durch Aufschleudern ("Spin-coating") auf ein vorher gereinigtes oder gegebenenfalls vorbehandeltes Substrat ("Subbing-layer") aufgebracht und die Schicht an der Luft getrocknet oder gehärtet. Der Film kann auch im Vakuum bei erhöhter Temperatur oder gegebenenfalls mit Strahlung getrocknet oder gehärtet werden.

Wie bereits oben ausgeführt, ist ein Aufzeichnungsmedium bevorzugt, dessen strahlungsempfindliche Schicht nur aus den Tetrazaporphyrinen der Formel I besteht, inbesondere ein solches, bei dem diese Schicht mittels Spin-coating aufgebracht wird.

Je nach Systemaufbau wird zuerst die strahlungempfindliche Schicht und dann der Reflektor aufgebracht oder umgekehrt verfahren. Auf das Aufbringen von Zwischen- oder Schutzschichten oder einer reflektierenden Schicht kann, wie bereits oben ausgeführt, gegebenenfalls auch verzichtet werden.

Bevorzugt ist ein Monoschichtsystem ohne Reflektor.

Die erfindungsgemäßen Aufzeichnungsmedien können mittels eines Schreiblaserstrahls mit analogen oder digitalen Daten beschrieben werden, wobei man zum Einschreiben analoger Daten bekanntermaßen einen analog modulierten Dauerstrichlaser und zum Einschreiben digitaler Daten einen impulskodierten Laser verwendet.

Im allgemeinen weisen geeignete Laser bei der Schreibwellenlänge eine Strahlleistung von 1 bis 20 mW auf. Der Fokus-Durchmesser des Schreiblaserstrahls liegt im allgemeinen bei 300 bis 2000 nm. überlicherweise beträgt die Impulsdauer bei der Bestrahlung mit einem impulscodierten Laser 10 bis 1000 ns. Vorteilhaft verwendet man zum Einschreiben einen Laserstrahl mit Licht einer Wellenlänge, die von der betreffenden Aufzeichnungsschicht gut absorbiert wird. Vorteilhaft sind Wellenlängen von 400 bis 1000 nm.

Beim Schreibvorgang wird der Laserstrahl in relativer Bewegung über das Aufzeichnungsmaterial hinweggeführt und trifft dabei senkrecht auf dieses auf, wobei er auf die Aufzeichnungsschicht fokussiert ist. An der Auftreffstelle wird die Aufzeichnungsschicht lokal erhitzt und es entstehen thermisch veränderte Bereiche, beispielsweise in der Form von Löchern, Kratern oder Flecken. Beim Einschreiben von Daten mit impulskodierten Lasern haben diese Bereiche im wesentlichen eine runde oder ovale Form mit einem Durchmesser von 100 bis 2000 nm. Beim Einschreiben mit einem analog modulierten Dauerstrichlaser können sie beliebige Formen haben.

Das erfindungsgemäße optische Aufzeichnungsmedium eignet sich ausgezeichnet für die laseroptische Datenaufzeichnung.

Das Schreiben der Daten in die Aufzeichnungsschicht kann von der dem Träger abgewandten Seite der Schicht her oder durch den optisch klaren Träger hindurch erfolgen. Letzteres ist von besonderem Vorteil.

Die eingeschriebenen Daten werden mit Hilfe eines Leselaserstrahls gelesen. Die Strahlleistung des Leselasers bei der Lesewellenlänge liegt unterhalb der Schwellenleistung ab der ein Beschreiben möglich wird. Im allgemeinen liegt die Strahlleistung bei 0,1 bis 1,5 mW. Vorteilhaft verwendet man Laserlicht einer Wellenlänge, die von der Aufzeichnungsschicht stark reflektiert wird. Vorteilhaft ist eine Wellenlänge von 400 bis 1000 nm, insbesondere 630 bis 900 nm.

Auch beim Lesevorgang wird der Leselaserstrahl in relativer Bewegung über das Aufzeichnungsmaterial hinweggeführt und trifft senkrecht auf dieses auf, wobei er auf die Aufzeichnungsschicht fokussiert ist.

Trifft der Leselaserstrahl beim überstreichen der Aufzeichnungsschicht auf einen thermisch veränderten Bereich, beispielsweise einen Fleck, so ändern sich die Eigenschaften des vom Aufzeichnungsmaterials transmittierten oder reflektierten Lichts, was mit Hilfe geeigneter Detektoren nachgewiesen werden kann.

Dabei kann das Lesen der Daten in der Aufzeichnungsschicht von der dem Träger abgewandten Seite der Schicht her oder durch die optisch klaren, transparenten Träger hindurch erfolgen, wobei letzteres von Vorteil ist. Hierbei ist es besonders vorteilhaft, das reflektierte Licht zu erfassen.

Außerdem ist es von besonderem Vorteil, hierzu Schreib- und Leselaser zu verwenden, die im infraroten Wellenlängenbereich von 650 bis 900 nm ausstrahlen. Dabei ist es außerdem von Vorteil, wenn die Schreibwellenlänge mit der Lesewellenlänge identisch ist oder sich nur wenig von ihr unterscheidet. Licht dieser Wellenlängen wird von üblichen und bekannten Halbleiter-Lasern geliefert.

Die erfindungsgemäßen Aufzeichnungsmedien weisen zahlreiche besondere Vorteile auf. So ist ihre unbeschriebene Aufzeichnungsschicht besonders stabil, so daß sie sich selbst nach langer Lagerzeit bei vergleichsweise hoher Temperatur- und Luftfeuchtigkeit noch immer hervorragend für die laseroptische Datenaufzeichnung eignet. Gleiches gilt für die beschriebene Aufzeichnungsschicht; hier tritt selbst bei sehr langer Lagerung kein Informationsverlust ein. Es können daher auch Schreiblaser mit vergleichsweise geringer Lichtleistung verwendet werden. Außerdem weisen die beschriebenen Aufzeichnungsmaterialien einen ganz besonders hohen optischen Kontrast zwischen beschriebenen und unbeschriebenen Bereichen auf, welcher den bisher bekannten optischen Kontrast beschriebener Phthalocyaninschichten übertrifft. Des weiteren wird bei den neuen Aufzeichnungsmaterialien eine Bitdichte von deutlich über 10⁷ bits/cm² erreicht, wobei die Daten dann auch noch unmittelbar nach dem Einschreiben gelesen werden können.

Die erfindungsgemäßen Tetraazaporphyrine der Formel I weisen weitere sehr gute anwendungstechnische Eigenschaften auf und können daher auch für andere Verwendungszwecke dienen. Insbesondere können sie für die Herstellung von IR-Schutzschichten, IR-absorbierenden Folien, Sonnenbrillenbeschichtungen, Beschichtungen für Autowindschutzscheiben, IR-Tinten, Druckfarben für IR-lesebare Streifencodes, Flüssigkristallanzeigen oder IR-Sicherheitssysteme verwendet werden.

Unter IR-lesbaren Streifencodes sind beispielsweise die auf Warenverpackungen angebrachten Streifencodes zu verstehen, welche der genauen Kennzeichnung der Waren dienen.

Unter Flüssigkristallanzeigen oder "Displays" werden die bekannten Anordnungen verstanden, welche Schichtdicken aus flüssig-kristallinen Stoffen enthalten. Diese Schichten ändern bei Anlegen einer elektrischen Spannung lokal ihre optischen Eigenschaften, wodurch z.B. Zahlen, Buchstaben oder Bilder sichtbar dargestellt (angezeigt) werden können.

Unter IR-Sicherheitssystemen werden Anordnungen verstanden, welche im wesentlichen aus einer Laserlichtquelle und einem geeigneten, räumlich weiter davon entfernten Detektor bestehen. Der von der Laserlichtquelle ausgesandte Laserstrahl trifft dabei auf den Detektor und bildet eine sogenannte Lichtschranke. Wird diese unterbrochen, so wird über den Detektor ein Alarm ausgelöst.

Elektrophotographische Aufzeichnungsmaterialien enthalten im wesentlichen Schichten, welche in der Dunkelheit einen hohen elektrischen Widerstand aufweisen, wohingegen sie bei der Belichtung leitfähig werden. Werden solche Schichten in der Dunkelheit an ihrer Oberfläche elektrostatisch aufgeladen und anschließendd bildmäßig belichtet, so wird die elektrostatische Ladung in den belichteten Bereichen abgeleitet und es entsteht ein elektrostatisches Bild, welches mit Hilfe sogenannter Toner sichtbar gemacht werden kann.

Die folgenden Beispiele sollen die Erfindung näher erläutern.

### A) Synthese

### Beispiel 1

a) Chinolin-2,3-dicarboxamid
   30 g Chinolin2,3-dicarbonsäurediethylester wurden in 200 ml wäßriger Ammoniaklösung (20 gew.%ig) und 100 ml Isopropanol bei Raumtemperatur I Tag gerührt. Das resultierende Dicarboxamid wurde abgesaugt und mit wenig Methanol gewaschen.
b) 2,3-Dicyanochinolin
   9,3 g des Dicarboxamids aus a) wurden in 90 ml N,N-Dimethylformamid vorgelegt. Zu dieser Mischung wurden bei 0°C 10 ml POCl₃ zugetropft. Das Reaktionsgemisch wurde 20 Stunden bei Raumtemperatur gerührt, auf Eiswasser gegossen, abgesaugt und mit Wasser gewaschen. Ausbeute: 7,5 g, Fp.: 204-206°C.
c) 4-Aza-1,3-diimino-benzo[f]isoindolin
   5 g des unter b) erhaltenen Dinitrils wurden in 80 ml Methanol vorgelegt, 0,5 g Natriummethylat zugegeben und unter Rückfluß 12 Stunden mit Ammoniak begast. Nach dem Erkalten wurde abgesaugt und mit wenig Methanol gewaschen. Ausbeute: 4,5 g, Fp.: 230°C
d) Tetraazaporphyrin der Formel IX (E¹=E²=Cl) 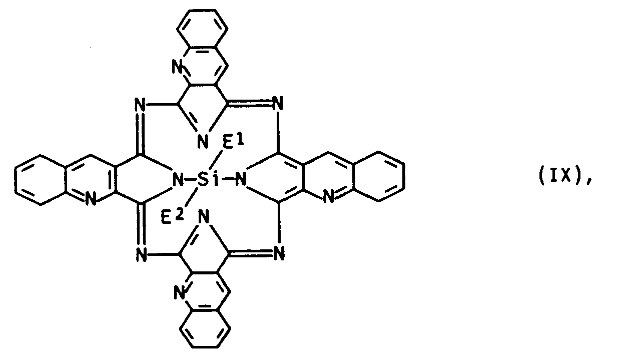 4,0 g des unter c) erhaltenen Produktes wurden mit 30 ml Tetralin, 4,0 ml SiCl₄ und 15 ml Tributylamin 6 Stunden auf 230°C erhitzt. Nach dem Abkühlen wurde mit 100 ml Methanol verdünnt, abgesaugt, mit Methanol gewaschen und getrocknet. Ausbeute: 2,0 g
e) Tetraazaporphyrin der Formel IX (E¹=E²=OH)
   5,0 g des unter d) erhaltenen Produkts wurden in 100 ml konz. Schwefelsäure 20 Stunden gerührt. Das Reaktionsgemisch wurde dann auf Eiswasser gegossen, der resultierende Niederschlag abgesaugt, mehrmals mit Methanol gewaschen und getrocknet.
   Ausbeute: 4,8 g
f) Tetraazaporphyrin der Formel IX 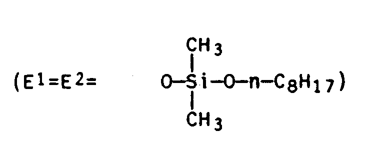 4,0 g des unter e) erhaltenen Produkts wurden in 150 ml Pyridin vorgelegt. Nach Zugabe von 5,0 ml Tributylamin und 0,5 g Natriumhydrid wurde 2 Stunden bei 80°C gerührt, danach auf Raumtemperatur abgekühlt und 8,5 ml Dimethyldichlorsilan zugegeben. Nach Rühren über Nacht wurden 4,0 ml n-Octanol zugegeben und 6 Stunden auf 80°C erhitzt. Danach wurde der größte Teil des Pyridins unter vermindertem Druck abgezogen. Der Rückstand wurde mit Methanol verrührt, abgesaugt und mit Methanol gewaschen.
   λₘₐₓ (CH₂Cl₂): 724 nm Rf-Wert (Toluol): 0,75
g) Tetraazaporphyrin der Formel IX 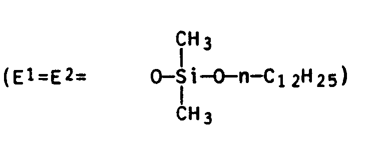 Durchführung analog Beispiel f), jedoch wurden anstelle von 4,0 ml n-Octanol 4,0 ml n-Dodecanol zugegeben.
   λₘₐₓ (CH₂Cl₂): 724 nm Rf-Wert (Toluol): 0,71

In beiden Fällen wurde der Rf-Wert auf Kieselgelplatten der Firma Macherey und Nagel (Polygram 0,2 mm, N-HR UV254) bestimmt.

### B) Anwendung

### Herstellvorschrift für ein Aufzeichnungsmedium

1 g der unter f) genannten Verbindung wurde in 20 ml Toluol bei Raumtemperatur über Nacht gerührt und danach mittels überdruck durch eine Fritte (P4) gepreßt. Die resultierende Lösung wurde dann mittels einer Spritze auf eine rotierende Scheibe aus Polymethylmethacrylat (Durchmesser 12 cm) aufgetragen. Die Lösung wurde dabei bei einer Drehzahl von 2000 U/min 25 sec lang abgeschleudert und anschließend 35 sec bei einer Drehzahl von 5000 U/min trockengeschleudert. Die erhaltene Schicht war homogen, pin-hole-frei und hochreflektierend.

Die Schicht weist bei 800 nm eine Reflexion von 35 %, bei 780 nm eine Reflexion von 32 % und bei 750 nm eine Reflexion von 28 % auf.

In einem Laserlaufwerk konnte diese Schicht mit einem 744 nm-Laser, der eine Leistung von maximal 3,5 mW aufwies, empfindlich beschrieben und wieder ausgelesen werden.

Das Aufzeichnungsmaterial wurde zehn Wochen lang bei 60°C und einer relativen Luftfeuchtigkeit von 90 % gelagert. Dabei traten keine nachteiligen Veränderungen ein, sondern die aufgezeichneten Daten konnten nach wie vor fehlerfrei gelesen werden.

## Patentansprüche

1. Tetraazaporphyrine der Formel I 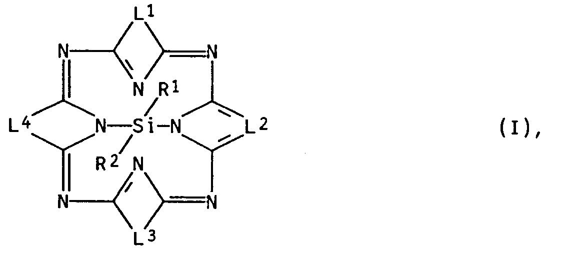 in der
L¹, L², L³ und L⁴ gleich oder verschieden sind und unabhängig voneinander jeweils den Rest eines bicyclischen aromatischen Heterocyclus mit 1 bis 3 gleichen oder verschiedenen Heteroatomen, ausgewählt aus der Gruppe, umfassend N, O und S, der gegebenenfalls durch C₁-C₂₀-Alkyl, das gegebenenfalls durch Phenyl substituiert ist, C₂-C₂₀-Alkenyl, C₁-C₂₀-Alkoxy, das gegebenenfalls durch Phenyl substituiert ist, Fluor, Chlor oder Brom substituiert ist, und
R¹ und R² gleich oder verschieden sind und unabhängig voneinander jeweils Hydroxy, C₁-C₂₀-Alkoxy, C₁-C₂₀-Alkyl, C₂-C₂₀-Alkenyl, C₃-C₂₀-Alkenyloxy oder einen Rest der Formel II 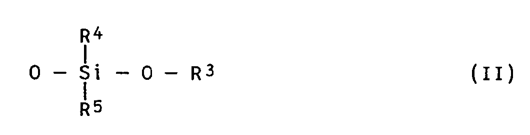 bedeuten, worin R³ für C₄-C₂₀-Alkyl, C₄-C₂₀-Alkenyl oder durch Phenyl substituiertes C₁-C₂₀-Alkyl und R⁴ und R⁵ gleich oder verschieden sind und unabhängig voneinander jeweils für C₁-C₁₂-Alkyl oder den Rest OR³, in dem R³ die obengenannte Bedeutung besitzt, stehen.

2. Optisches Aufzeichnungsmedium, enthaltend einen Träger und eine gegenüber Strahlung empfindliche Schicht, dadurch gekennzeichnet, daß die gegenüber Strahlung empfindliche Schicht ein Tetraazaporphyrin der Formel I 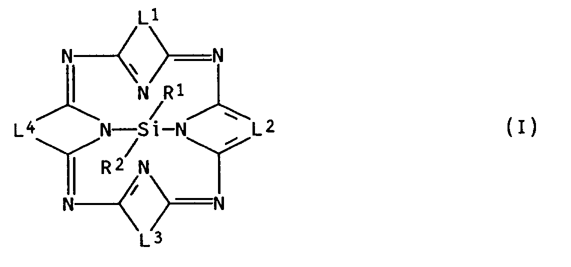 enthält, in der
L¹, L², L³ und L⁴ gleich oder verschieden sind und unabhängig voneinander jeweils den Rest eines bicyclischen aromatischen Heterocyclus mit 1 bis 3 gleichen oder verschiedenen Heteroatomen, ausgewählt aus der Gruppe, umfassend N, O und S, der gegebenenfalls durch C₁-C₂₀-Alkyl, das gegebenenfalls durch Phenyl substituiert ist, C₂-C₂₀-Alkenyl, C₁-C₂₀-Alkoxy, das gegebenenfalls durch Phenyl substituiert ist, Fluor, Chlor oder Brom substituiert ist, und
R¹ und R² gleich oder verschieden sind und unabhängig voneinander jeweils Hydroxy, C₁-C₂₀-Alkoxy, C₁-C₂₀-Alkyl, C₂-C₂₀-Alkenyl, C₃-C₂₀-Alkenyloxy oder einen Rest der Formel II 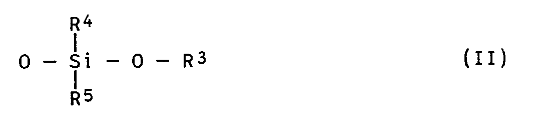 bedeuten, wobei R³ für C₄-C₂₀-Alkyl, C₄-C₂₀-Alkenyl oder durch Phenyl substituiertes C₁-C₂₀-Alkyl und R⁴ und R⁵ gleich oder verschieden sind und unabhängig voneinander jeweils für C₁-C₁₀-Alkyl oder den Rest OR³, in dem R³ die obengenannte Bedeutung besitzt, stehen.

## Claims

1. A tetraazaporphyrin of the formula I 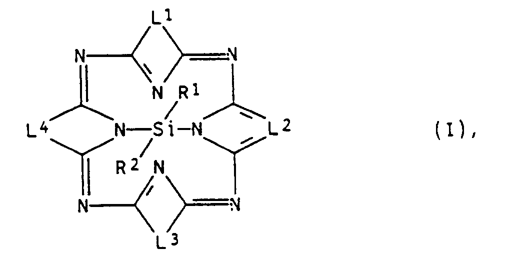 where
L¹ , L², L³ and L⁴ are identical or different and each is independently of the others the radical of a bicyclic aromatic heterocycle having 1, 2 or 3 identical or different heteroatoms selected from the group consisting of N, O and S, which radical may be substituted by C₁-C₂₀-alkyl, which may be phenyl-substituted, C₂-C₂₀-alkenyl, C₁-C₂₀-alkoxy, which may be phenyl-substituted, fluorine, chlorine or bromine, and
R¹ and R² are identical or different and each is independently of the other hydroxyl, C₁-C₂₀-alkoxy, C₁-C₂₀-alkyl, C₂-C₂₀-alkenyl, C₃-C₂₀-alkenyloxy or a radical of the formula II 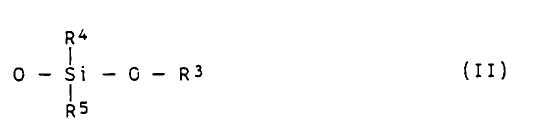 where R³ is C₄-C₂₀-alkyl, C₄-C₂₀-alkenyl or phenyl-substituted C₁-C₂₀-alkyl, and R⁴ and R⁵ are identical or different and each is independently of the other C₁-C₁₂-alkyl or OR³, where R³ is as defined above.

2. An optical recording medium comprising a base and a radiation-sensitive layer, wherein the radiation-sensitive layer contains a tetraazaporphyrin of the formula I 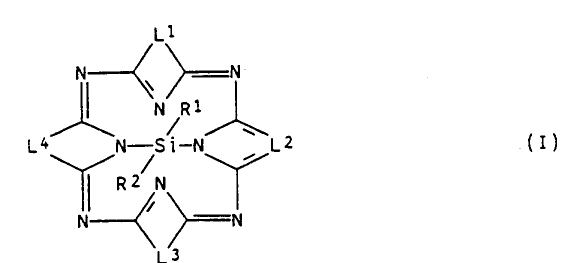 where
L¹ , L², L³ and L⁴ are identical or different and each is independently of the others the radical of a bicyclic aromatic heterocycle of 1, 2 or 3 identical or different heteroatoms selected from the group consisting of N, O and S, which radical may be substituted by C₁-C₂₀-alkyl, which may be phenyl-substituted, C₂-C₂₀-alkenyl, C₁-C₂₀-alkoxy, which may be phenyl-substituted, fluorine, chlorine or bromine, and
R¹ and R² are identical or different and each is independently of the other hydroxyl, C₁-C₂₀-alkoxy, C₁-C₂₀-alkyl, C₂-C₂₀-alkenyl, C₃-C₂₀-alkenyloxy or a radical of the formula II 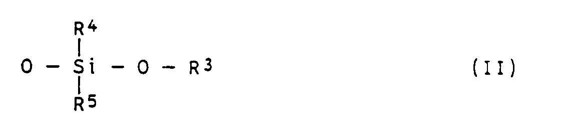 where R³ is C₄-C₂₀-alkyl, C₄-C₂₀-alkenyl or phenyl-substituted C₁-C₂₀-alkyl, and R⁴ and R⁵ are identical or different and each is independently of the other C₁-C₁₂-alkyl or OR³, where R³ is as defined above.

## Revendications

1. Tétraazaporphyrines de la formule I 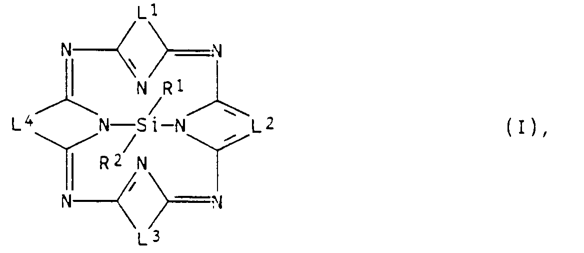 dans laquelle
L¹, L², L³ et L⁴ sont identiques ou différents et représentent, chacun indépendamment les uns des autres, à chaque fois le reste d'un hétérocycle aromatique bicyclique, qui comporte de 1 à 3 hétéroatomes identiques ou différents, que l'on choisit dans le groupe formé par l'azote, l'oxygène et le soufre, qui est éventuellement substitué par un radical alkyle en C₁ à C₂₀, qui est éventuellement substitué par un radical phényle, un radical alcényle en C₂ à C₂₀, un radical alcoxy en C₁ à C₂₀, qui est éventuellement substitué par un radical phényle, un atome de fluor, de chlore ou de brome et
R¹ et R² possèdent des significations identiques ou différentes et représentent, chacun indépendamment l'un de l'autre, un radical hydroxyle, alcoxy en C₁-C₂₀, alkyle en C₁-C₂₀, alcényle en C₂-C₂₀, alcényloxy en C₃-C₂₀, ou un reste de la formule II 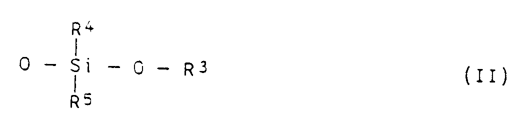 dans laquelle R³ représente un radical alkyle en C₄ à C₂₀, un radical alcényle en C₄ à C₂₀, ou un radical alkyle en C₁ à C₂₀ substitué par un groupe phényle et R⁴ et R⁵, qui sont identiques ou différents, représentent, chacun indépendamment l'un de l'autre, un radical alkyle en C₁ à C₁₂, ou le groupe OR³ dans lequel R³ possède les significations qui lui ont été attribuées ci-dessus.

2. Agent ou milieu d'enregistrement optique, qui contient un support et une couche sensible aux rayonnements, caractérisé en ce que la couche sensible aux rayonnements contient une tétraazaporphyrine de la formule I 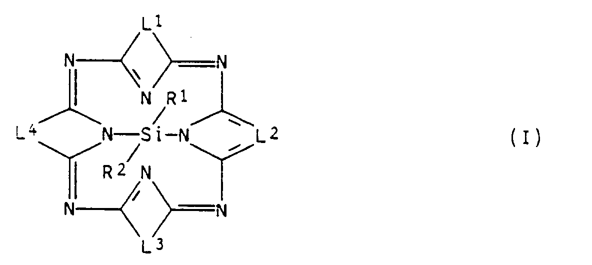 dans laquelle
L¹, L², L³ et L⁴ sont identiques ou différents et représentent, chacun indépendamment les uns des autres, à chaque fois le reste d'un hétérocycle aromatique bicyclique, qui comporte de 1 à 3 hétéroatomes identiques ou différents, que l'on choisit dans le groupe formé par l'azote, l'oxygène et le soufre, qui est éventuellement substitué par un radical alkyle en C₁ à C₂₀, qui est éventuellement substitué par un radical phényle, un radical alcényle en C₂ à C₂₀, un radical alcoxy en C₁ à C₂₀, qui est éventuellement substitué par un radical phényle, un atome de fluor, de chlore ou de brome et
R¹ et R² possèdent des significations identiques ou différentes et représentent, chacun indépendamment l'un de l'autre, un radical hydroxyle, alcoxy en C₁-C₂₀, alkyle en C₁-C₂₀, alcényle en C₂-C₂₀, alcényloxy en C₃-C₂₀, ou un reste de la formule II 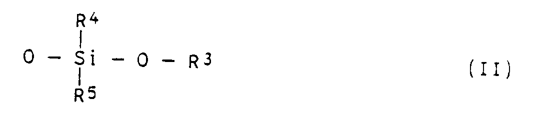 dans laquelle R³ représente un radical alkyle en C₄ à C₂₀, un radical alcényle en C₄ à C₂₀, ou un radical alkyle en C₁ à C₂₀ substitué par un groupe phényle et R⁴ et R⁵, qui sont identiques ou différents, représentent, chacun indépendamment l'un de l'autre, un radical alkyle en C₁ à C₁₀, ou le groupe OR³ dans lequel R³ possède les significations qui lui ont été attribuées ci-dessus.
